# EUROPÄISCHE PATENTANMELDUNG

(11) **EP 3 241 764 A1**
(43) Veröffentlichungstag der Anmeldung: **08.11.2017**
(21) Anmeldenummer: 16168016.0
(22) Anmeldetag: 03.05.2016
(51) Int. Cl.: B65B 31/02, B65B 51/14, B65G 23/44, B65G 39/16

(54) **KAMMERBANDMASCHINE MIT BANDLAUFEINSTELLUNG UND VERFAHREN DAFÜR**

(71) Anmelder: MULTIVAC Sepp Haggenmüller SE & Co. KG, 87787 Wolfertschwenden (DE)
(72) Erfinder: ÖFELE, Benjamin, 87463 Dietmannsried (DE); HÄRING, Rainer, 87761 Lauben (DE); MÖSSNANG, Konrad, 87439 Kempten (DE)
(74) Vertreter: Grünecker Patent- und Rechtsanwälte PartG mbB

(57) **Zusammenfassung**

Die Erfindung betrifft eine Kammerbandmaschine (1) mit einer Kammervorrichtung (2) für einen Verpackungsprozess und einer Transportvorrichtung (3) für einen Beladeprozess der Kammervorrichtung (2), wobei die Transportvorrichtung (3) ein Förderband (4) sowie einen Einstellmechanismus (7) zum Spannen und Einstellen eines Bandlaufs des Förderbands (4) umfasst, wobei der Einstellmechanismus (7) einen Schlitten (8), an welchem zum Führen des Förderbands (4) eine Umlenkrolle (10) mit einer Drehachse (11) drehbar befestigt ist, eine Führung (9) für den Schlitten (8), eine Spanneinheit (12), mittels welcher der Schlitten (8) entlang der Führung (9) zwischen mindestens einer ersten Position, in welcher das Förderband (4) entspannt ist, und mindestens einer zweiten Position verstellbar gelagert ist, in welcher der Schlitten (8) relativ zur Führung (9) eine Spannposition einnimmt, in welcher die Drehachse (11) der Umlenkrolle (10) in horizontaler Projektionsebene betrachtet in einer ersten Ausrichtung positioniert ist und eine vorbestimmte Spannung in dem Förderband (4) vorliegt, sowie eine Ausrichteinheit umfasst, mittels welcher der Bandlauf des Förderbands (4) einstellbar ist. Erfindungsgemäß ist die Ausrichteinheit (14) dazu konfiguriert, den Schlitten (8) in der Spannposition relativ zur Führung derart zu kippen, dass die Drehachse (11) der Umlenkrolle (10) in einer von der ersten Ausrichtung verschiedenen zweiten Ausrichtung ausgerichtet ist.

## Beschreibung

Die vorliegende Erfindung betrifft eine Verpackungsmaschine in Form einer Kammerbandmaschine gemäß dem Oberbegriff des Anspruchs 1. Ferner bezieht sich die Erfindung auf ein Verfahren zum Spannen und Einstellen eines Bandlaufs eines Förderbands einer Transportvorrichtung für eine Kammerbandmaschine gemäß dem Oberbegriff des unabhängigen Verfahrensanspruchs 11.

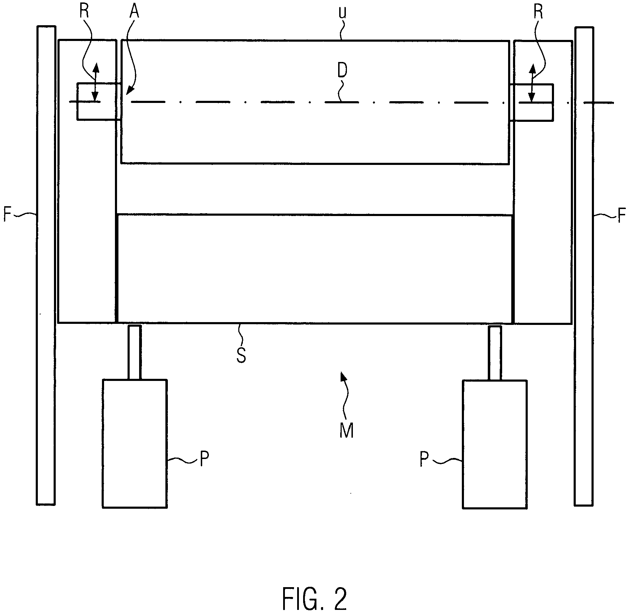

Fig. 2 zeigt in schematischer Darstellung einen bekannten Bandspannmechanismus M zum Spannen und Einstellen eines Bandlaufs eines Förderbands einer Transportvorrichtung für eine Kammerbandmaschine. Der Bandspannmechanismus M umfasst einen Schlitten S, welcher mittels zwei Pneumatikzylinder P entlang einer Führung F zwischen mindestens einer ersten Position, in welcher das Förderband entspannt ist, und mindestens einer zweiten Position verstellbar gelagert ist, in welcher der Schlitten S relativ zur Führung F eine Spannposition einnimmt. Ferner ist im Schlitten S eine Einstelleinheit A integral verbaut, die dazu ausgebildet ist, eine am Schlitten S drehbar gelagerte Umlenkrolle U relativ zum Schlitten S zu kippen, um den Bandlauf des Förderbands einzustellen. Wegen des integrierten Einbaus der Einstelleinheit A im Schlitten S ist dieser sehr massiv und steif ausgebildet. Ein solcher Schlitten S ist allerdings sehr kostenintensiv in der Herstellung.

Ausgehend von der in Fig. 2 gezeigten, kostspieligen Lösung liegt der Erfindung die Aufgabe zugrunde, eine Kammerbandmaschine mit einer Transportvorrichtung zum Spannen und Einstellen eines Bandlaufs eines Förderbands zur Verfügung zu stellen, wobei die Transportvorrichtung ohne funktionale Einschränkung hinsichtlich der bekannten Lösung kostengünstiger herstellbar ist. Ferner ist es die Aufgabe der Erfindung, ein Verfahren zum Spannen und Einstellen eines Bandlaufs eines Förderbands einer Transportvorrichtung für eine Kammerbandmaschine zur Verfügung zu stellen, wobei das Spannen und Einstellen des Bandlaufs auf präzise und gleichzeitig unter Verwendung kostengünstiger technischer Mittel umgesetzt werden kann.

Diese Aufgabe wird gelöst mittels einer Kammerbandmaschine gemäß dem Anspruch 1 bzw. mittels eines Verfahrens gemäß dem unabhängigen Anspruch 11. Verbesserte Weiterbildungen der Erfindung sind Gegenstand der Unteransprüche.

Die Erfindung bezieht sich auf eine Kammerbandmaschine mit einer Kammervorrichtung für einen Verpackungsprozess und einer Transportvorrichtung für einen Beladeprozess der Kammervorrichtung, wobei die Transportvorrichtung ein Förderband sowie einen Einstellmechanismus zum Spannen und Einstellen eines Bandlaufs des Förderbands umfasst. Der Einstellmechanismus umfasst einen Schlitten, an welchem zum Führen des Förderbands eine Umlenkrolle mit einer Drehachse drehbar befestigt ist. Ferner umfasst der Einstellmechanismus eine Führung für den Schlitten, eine Spanneinheit, mittels welcher der Schlitten entlang der Führung zwischen mindestens einer ersten Position, in welcher das Förderband entspannt ist, und mindestens einer zweiten Position verstellbar gelagert ist, in welcher der Schlitten relativ zur Führung eine Spannposition einnimmt, in welcher die Drehachse der Umlenkrolle in horizontaler Projektionsebene betrachtet in einer ersten Ausrichtung positioniert ist und eine vorbestimmte Spannung in dem Förderband vorliegt, sowie eine Ausrichteinheit, mittels welcher der Bandlauf des Förderbands einstellbar ist.

Erfindungsgemäß ist die Ausrichteinheit dazu konfiguriert, den Schlitten in der Spannposition relativ zur Führung derart zu kippen, dass die Drehachse der Umlenkrolle in einer von der ersten Ausrichtung verschiedenen zweiten Ausrichtung ausgerichtet ist.

Bei der Erfindung wird die Drehachse der Umlenkrolle dadurch in die zweite Ausrichtung gebracht, indem der Schlitten in horizontaler Projektionsebene betrachtet relativ zu dessen Führung kippt. Durch die Kippbewegung des Schlittens wird die von ihm getragene Umlenkrolle neu ausgerichtet, wobei die drehbare Lagerung der Umlenkrolle am Schlitten nicht verstellt wird, d.h., dass die Umlenkrolle nicht relativ zum Schlitten gekippt wird. Dabei kann bereits ein geringes Kippen des Schlittens dazu beitragen, dass das Förderband wunschgemäß seine Laufrichtung ändert. Mit der Bandlaufeinstellung könnte man gezielt einem gewissen Verschleiß, beispielsweise einer ungleichmäßigen Dehnung des Förderbands entgegenwirken oder auch den Bandlauf in Abhängigkeit von einer Beladung des Förderbands mit produktbefüllten Beuteln entsprechend regulieren. Die Bandlaufregulierung erlaubt es auch, einem seitlichen Abdriften des Förderbands entgegenzuwirken.

Im Gegensatz zum Stand der Technik ist bei der Erfindung die Ausrichteinheit nicht integral im Schlitten verbaut, sondern ist zumindest in baulicher Betrachtungsweise entkoppelt, d.h. isoliert vom Schlitten gelagert. Dadurch ist es möglich, den Schlitten weniger massiv und damit wesentlich leichter auszubilden, wodurch dessen Herstellungskosten erheblich reduziert werden können. Antriebsmittel zum Spannen des Schlittens lassen sich dadurch auch kostengünstiger dimensionieren. Besonders erwähnenswert ist aber auch, dass trotz der kostengünstigen Ausführung der Erfindung keinerlei funktionale Einschränkungen für die Bandlaufregelung in Kauf genommen werden müssen. Insgesamt bietet die Erfindung deshalb für den Kunden eine verbesserte Lösung.

Vorteile bietet die Erfindung auch in der Hinsicht, dass die Ausrichteinheit wegen ihrer vom Schlitten isolierten Bauweise besser zugänglich ist, was insbesondere für Wartungs- und Einstellarbeiten hilfreich ist.

Entgegen dem allgemein gültigen technischen Bestreben, einem verlagerbaren Schlitten eine spielfreie Führung zur Verfügung zu stellen, ist vorzugsweise bei der Erfindung in axialer Richtung der Umlenkrolle betrachtet ein axiales Spiel zwischen dem Schlitten und der Führung ausgebildet, damit der Schlitten relativ zur Führung gekippt positionierbar ist. Demzufolge kann bei der Erfindung eine bewusst mit Spiel behaftete Führung für den Schlitten ausgebildet sein, damit dieser relativ zu dessen Führung kippbar ist, um die am Schlitten drehbar gelagerte Umlenkrolle in eine gewünschte Ausrichtung zu bringen. Überraschenderweise hat sich bei dieser Ausführungsvariante herausgestellt, dass trotz einer mit einem vorbestimmten Spiel behafteten Führung des Schlittens dieser problemlos zum Spannen und Entspannen des Förderbands verstellbar gelagert ist. Gewissermaßen wirkt dabei das um die Umlenkrolle geführte Förderband selbst beim Spannvorgang als Richtungsgeber, sodass es beim Spannen des Förderbands nicht zu einem Verkanten des Schlittens kommen kann. Selbstverständlich versteht der Fachmann, dass ihm bei der konstruktiven Ausgestaltung des axialen Spiels zur Führung des Schlittens Grenzen gesetzt sind. Nichtsdestotrotz wird er bei der Erfindung feststellen, dass bereits wenige Millimeter axiales Spiel zu einer Kippbewegung des Schlittens beitragen können, um den Bandlauf wunschgemäß einzustellen.

Gemäß einer Ausführungsvariante ist die Ausrichteinheit vom Schlitten entkoppelt gelagert. Dies bedeutet, dass keinerlei Komponenten der Ausrichteinheit mehr im Schlitten baulich integriert sind, so dass der Schlitten nicht mehr als Aufnahme für die Ausrichteinheit ausgebildet werden muss. Folglich kann der Schlitten weniger massiv und damit kostengünstiger hergestellt werden. Die Auslagerung sämtlicher Bauteile der Ausrichteinheit aus dem Schlitten bedingt auch den vorteilhaften Effekt, dass sich die Ausrichteinheit sowie der Schlitten besser reinigen lassen.

Gemäß einer weiteren Ausführungsvariante ist die Ausrichteinheit mindestens teilweise an einem Maschinengestell der Transportvorrichtung ausgebildet. Bei dieser Ausführungsvariante ist die Ausrichteinheit besonders leicht für einen Bediener zugänglich, so dass dieser jeder Zeit schnell eine Bandlaufregulierung durchführen kann und insbesondere einem unerwünschten Bandlauf reaktionsschnell entgegensteuern kann. Indem die Ausrichteinheit am Maschinengestell befestigt ist, ist sie auch besonders stabil gelagert.

Vorzugsweise ist die Umlenkrolle an einer zur Kammervorrichtung abgewandten Seite der Transportvorrichtung angeordnet. An dieser Position hält der Bediener beim Einstellen des Bandlaufs genügend Sicherheitsabstand zur Kammervorrichtung, sodass selbst während eines Betriebs der Kammerbandmaschine regulierende Einstellungen an der Ausrichteinheit unternommen werden können.

Vorzugsweise umfasst die Ausrichteinheit zur Schrägstellung des Schlittens mindestens einen verstellbar gelagerten Anschlag. Der Anschlag kann wahlweise auf Kontakt zum Schlitten verstellbar gelagert sein. Weiter kann der Anschlag voreingestellt sein, sodass der Schlitten beim Verfahren in die Spannposition bereits gegen den Anschlag stößt, oder erst nachdem der Schlitten in der Spannposition angekommen ist, gegen den Schlitten verstellt werden, sodass der Schlitten in seiner Spannposition kippt. Das Kippen des Schlittens spielt dabei für die Spannung des Förderbands eine unwesentliche Rolle, wohl aber für den Bandlauf des Förderbands.

Der Anschlag ist dazu ausgebildet, für den Schlitten ein Kipplager zu bilden, um welches sich der Schlitten kippen lässt, um die daran drehbar gelagerte Umlenkrolle in eine bestimmte Ausrichtung zu bringen. Wegen der verstellbaren Lagerung des Anschlags können unterschiedliche Kipplagerpositionen eingestellt werden. Dies begünstigt den Einsatz unterschiedlicher Förderbänder und ermöglicht eine gewisse Anpassung der Ausrichteinheit bezüglich einer zunehmenden Dehnung im Förderband. Für eine geschmeidige Kippbewegung des Schlittens könnte der Anschlag am Kipplager mit einem Radius ausgebildet sein.

Bevorzugterweise ist der Anschlag stufenlos verstellbar. Dadurch kann der Schlitten sehr präzise relativ zu seiner Führung gekippt werden, was zur Folge hat, dass die vom Schlitten getragene Umlenkrolle in ihrer Ausrichtung und somit auch der Bandlauf des darauf geführten Förderbands besonders feinfühlig einstellbar sind.

Vorstellbar wäre es, dass der Anschlag mindestens ein Gewindeelement umfasst, beispielsweise als Gewindeschraube ausgebildet ist. Damit ließe sich der Anschlag auf kostengünstige Art und Weise an der Transportvorrichtung verstellbar befestigen. Bei einer Ausführungsform kann der Anschlag entgegen einer Führungsrichtung des Schlittens verstellbar gelagert sein.

Bei einer besonders kostengünstigen Ausführung ist der Anschlag manuell verstellbar gelagert. Vorstellbar wäre es jedoch auch, dass die Ausrichteinheit einen pneumatischen, elektrischen und/oder magnetischen Antrieb zur Verstellung des Anschlags umfasst.

Bei einer weiteren Ausführungsvariante umfasst die Ausrichteinheit einen weiteren Anschlag, wobei beide Anschläge zum Kippen des Schlittens gegen diesen auf Kontakt verstellbar sind.

Die beiden Anschläge sind vorzugsweise unabhängig zueinander einstellbar, sodass unzählig viele Kippeinstellungen für den Schlitten einstellbar sind. Vorstellbar wäre allerdings auch eine aneinander gekoppelte Verstellbarkeit der beiden Anschläge, sodass der Schlitten nur in vorbestimmten Kipplagen positionierbar ist. Dies käme vor allem bei einer der oben genannten antriebsgesteuerten Module in Frage.

Vorzugsweise sind die Spanneinheit und die Ausrichteinheit derart ausgebildet, dass sie in entgegensetzten Richtungen aufeinander Kräfte ausüben. Damit lässt sich der Schlitten hervorragend in einer vorbestimmten Gleichgewichtslage, d.h. Kipplage stabil halten.

Vornehmlich umfasst die Spanneinheit mindestens einen Pneumatikzylinder. Wegen der leichten Ausführung des Schlittens kann in den meisten Fällen lediglich ein Pneumatikzylinder verwendet werden, um den Schlitten zwischen der ersten und zweiten Position zu verstellen.

Vorstellbar wäre es, dass der Pneumatikzylinder mittels variierender Druckgrößen den Schlitten in der Spannposition halten kann. Dadurch ließe sich eine Bandkantensteuerung/-regelung realisieren. Ein Bediener könnte dann nach voreingestellter Spannung und Einstellung des Bandlaufs des Förderbands den Bandlauf über den Pneumatikzylinder bzw. dessen Druckluftversorgung nachjustieren. Dies könnte insbesondere bei einem Chargenwechsel zu verpackender Produkte vorteilhaft sein.

Gemäß einer Ausführungsform ist die Kammerbandmaschine als Vakuumkammerbandmaschine ausgebildet. Die in der Kammervorrichtung zu verpackenden Produkte können damit evakuiert und/oder einer bestimmten Schutzatmosphäre ausgesetzt werden.

Eine andere Variante sieht vor, dass die Kammervorrichtung mindestens eine Siegelvorrichtung mit einer Siegelschiene und einer Gegendruckleiste umfasst. Die Siegelschiene kann lösbar an einem Deckel der Kammervorrichtung befestigt sein. Insbesondere kann die Siegelschiene an unterschiedlichen Innenseiten des Deckels montiert sein.

Die Erfindung bezieht sich auch auf ein Verfahren zum Spannen und Einstellen eines Bandlaufs eines Förderbands einer Transportvorrichtung für eine Kammerbandmaschine, wobei eine Spanneinheit das Förderband spannt und eine Ausrichteinheit den Bandlauf des Förderbands einstellt, wobei die Spanneinheit einen beweglich in einer Führung gelagerten Schlitten in einer Spannposition hält, in welcher der Schlitten eine an ihm drehbar gelagerte Umlenkrolle in einer ersten Ausrichtung trägt, wobei die Umlenkrolle mittels der Ausrichteinheit in eine davon verschiedene, zweite Ausrichtung gebracht wird, um den Bandlauf des Förderbands zu ändern.

Erfindungsgemäß kippt die Ausrichteinheit den Schlitten relativ zu der Führung, um die Umlenkrolle aus der ersten in die zweite Ausrichtung zu bringen.

Vorzugsweise kann der Schlitten in horizontaler Projektionsebene betrachtet relativ zur Führung in mehreren stufenlos einstellbaren Ausrichtungen positioniert werden. Damit lässt sich auch die Umlenkrolle in zahlreichen Ausrichtungen positionieren, so dass der Bandlauf des Förderbands präzise einstellbar ist.

Eine besonders einfache Handhabe und kostengünstige Ausführung ergibt sich dadurch, dass die Ausrichteinheit manuell eingestellt wird. Die manuelle Einstellbarkeit der Ausrichteinheit bietet dem Bediener ebenfalls eine feinfühlige Einstellfunktion.

Kostengünstig herstellbar ist die Transportvorrichtung insbesondere dann, wenn die Ausrichteinheit bei einer Verstellung des Schlittens von einem Maschinengestell der Transportvorrichtung abgestützt wird. Daran lässt sich die Ausrichteinheit problemlos anbauen und ist insbesondere auch für Reinigungszwecke leichter zugänglich.

Vorzugsweise wirken mittels der Ausrichteinheit aufgebrachte Verstellkräfte von außen auf den Schlitten. Weil bei dieser Ausführung keine integral verbauten Einstellkomponenten im Schlitten ausgebildet sind, kann dieser leichter und damit auch kostengünstiger hergestellt werden.

Bevorzugterweise findet bei der Einstellung der Transportvorrichtung zunächst das Spannen des Förderbands und erst anschließend das Ausrichten der Umlenkrolle statt. Vorstellbar wäre es auch, dass die Spanneinheit eine Bandkantensteuerung/-regelung mittels eines Pneumatikzylinders durchführt.

Im Folgenden wird eine vorteilhafte Ausführungsform der Erfindung anhand von Zeichnungen näher dargestellt. Im Einzelnen zeigen:
- Fig. 1: eine Kammerbandmaschine gemäß der Erfindung,
- Fig. 2: einen bekannten, schematisch dargestellten Bandspannmechanismus mit massiv ausgebildetem Schlitten,
- Fig. 3: eine schematische Darstellung ein ausführungsgemäßer Einstellmechanismus der Erfindung in horizontaler Schnittdarstellung,
- Fig. 4: eine schematische Darstellung ein ausführungsgemäßer Einstellmechanismus der Erfindung in vertikaler Schnittdarstellung und
- Fig. 5: eine schematische Darstellung des Schlittens in gekippter Lage.

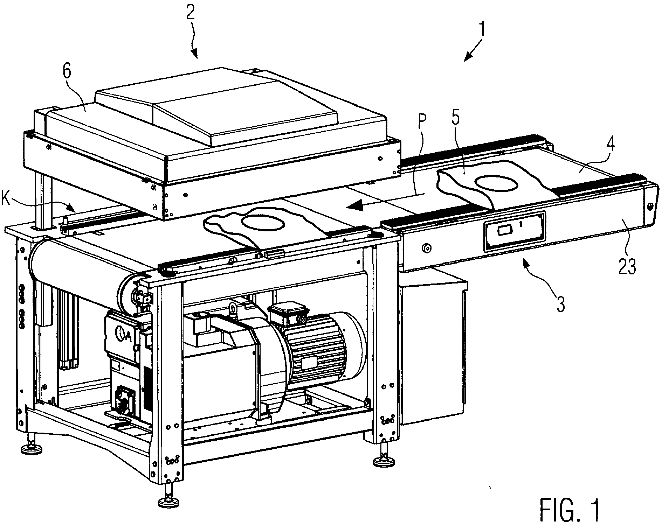

Fig. 1 zeigt eine Kammerbandmaschine 1. Die Kammerbandmaschine 1 umfasst eine Kammervorrichtung 2 für einen Verpackungsprozess und eine Transportvorrichtung 3 für einen Beladeprozess der Kammervorrichtung 2. Die Transportvorrichtung 3 umfasst ein entlang eines Maschinengestells 23 geführtes Förderband 4, welches in Transportrichtung P gesehen zu verschließende Beutel 5 der Kammervorrichtung 2 zuführt.

Die Kammervorrichtung 2 umfasst einen höhenverstellbar gelagerten Deckel 6, welcher im gesenkten Zustand zusammen mit einem darunterliegenden Abschnitt der Transportvorrichtung 3 eine Kammer K für den Verpackungsprozess ausbildet.

Fig. 2 zeigt, wie bereits in der Beschreibungseinleitung erläutert wurde, einen bekannten Bandspannmechanismus M mit einem massiv ausgebildeten Schlitten S. Der Schlitten S ist mittels zwei Pneumatikzylindern P relativ zu einer beidseitigen Führung F verschiebbar gelagert. Ferner ist im Schlitten S eine Ausrichteinheit A integral verbaut, die dazu ausgebildet ist, eine am Schlitten S drehbar gelagerte Umlenkrolle U relativ zum Schlitten S in Richtung R zu kippen, damit eine Drehachse D der Umlenkrolle U eine gewünschte Ausrichtung einnimmt. Beim Kippen der Umlenkrolle U bleibt der Schlitten S relativ zur Führung F fixiert.

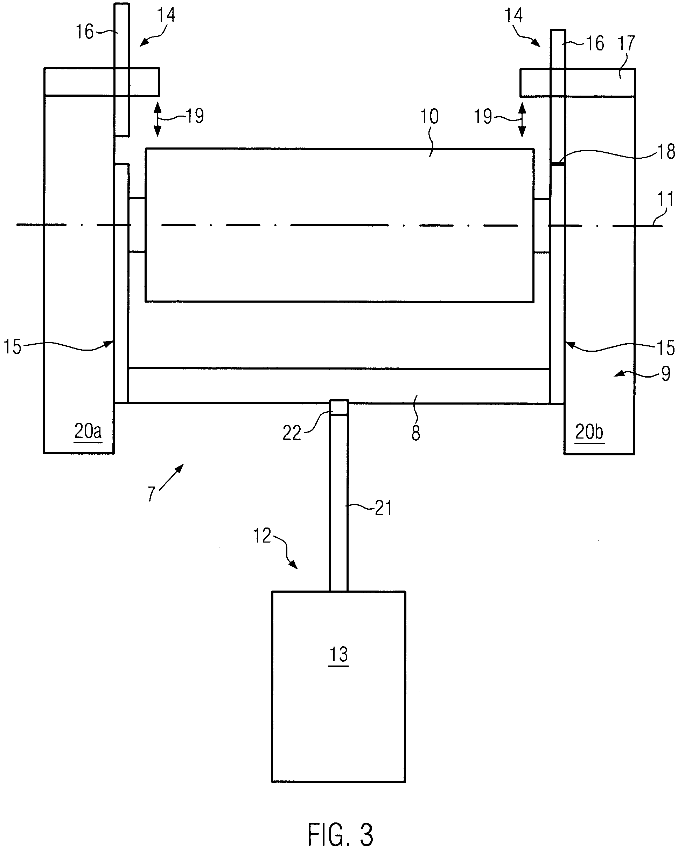

Fig. 3 zeigt einen Einstellmechanismus 7 der Transportvorrichtung 3 aus Fig. 1. Der Einstellmechanismus 7 verfügt über einen U-förmigen Schlitten 8, der entlang einer beidseitigen Führung 9 verschiebbar gelagert ist. Am Schlitten 8 ist zum Führen des Förderbands 4 eine Umlenkrolle 10 mit einer Drehachse 11 drehbar befestigt.

Der Einstellmechanismus 7 besitzt gemäß Fig. 3 eine Spanneinheit 12 für den Schlitten 8, welche als Pneumatikzylinder 13 ausgebildet ist. Mittels der Spanneinheit 12 kann der Schlitten 8 entlang der Führung 9 verstellt werden. Die Spanneinheit 12 kann den Schlitten 8 zwischen einer ersten Position, in welcher das Förderband 4 entspannt ist, und einer zweiten Position in welcher das Förderband 4 gespannt ist bewegen.

Gemäß Figur 3 umfasst die Führung 9 zwei Ausleger 20a, b, zwischen welchen der Schlitten 8 gelagert ist. Die Ausleger 20a, b können als Teil der Transportvorrichtung 3 ausgebildet sein.

In Fig. 3 ist an oberen Enden der Ausleger 20a, b jeweils eine Ausrichteinheit 14 ausgebildet. Die jeweiligen Ausrichteinheiten 14 umfassen eine Halterung 17 und einen daran verstellbar gelagerten Anschlag 16. Fig. 3 zeigt auch, dass die jeweiligen Ausrichteinheiten 14 baulich gesehen vom Schlitten 8 entkoppelt gelagert sind, allerdings funktional mit dem Schlitten 8 derart zusammenwirken können, dass dieser relativ zur Führung 9 kippbar ist. Dafür ist in Fig. 3 zwischen dem Schlitten 8 und den jeweiligen Auslegern 20a, b in axialer Richtung der Umlenkrolle 10 betrachtet ein vorbestimmtes axiales Spiel 15 ausgebildet, wodurch in horizontaler Projektionsebene betrachtet dem Schlitten 8 in axialer Richtung der Umlenkrolle 10 ein gewisser Raum für eine Kippbewegung zur Verfügung steht, sodass der Schlitten 8 relativ zur Führung 9, d.h. zwischen den Auslegern 20a, b kippbar gelagert ist.

Die jeweiligen Anschläge 16 können entgegengesetzt zur Spannrichtung des Schlittens 8 derart an einem Kipplager 18 gegen den Schlitten 8 drücken, sodass dadurch der Schlitten 8 relativ zur Führung 9 kippt. Dies hat zur Folge, dass die Drehachse 11 der Umlenkrolle 10 verschieden ausgerichtet wird, um einen Bandlauf des Förderbands 4 einzustellen.

Bei der in Fig. 3 gezeigten Einstellung der beiden Anschläge 16 würde der Schlitten 8 im Uhrzeigersinn relativ zur Führung 9 kippen, wenn die Spanneinheit 12 zusätzlich Druck auf den Schlitten 8 ausüben würde. Die Doppelpfeile 19 deuten in Fig. 3 an, dass die jeweiligen Anschläge 16 verstellbar gelagert sind.

Gemäß Fig. 3 hat der Pneumatikzylinder 13 eine Schubstange 21, die über ein Gelenk 22 mit dem Schlitten 8 verbunden ist. Das Gelenk 22 kann eine Kippbewegung des Schlittens 8 wirksam vom Pneumatikzylinder 13 entkoppeln.

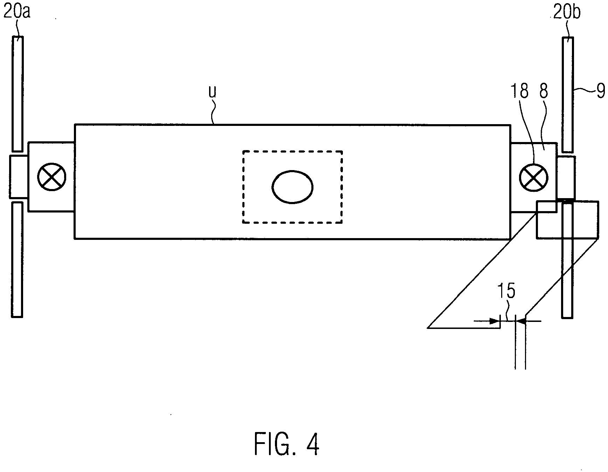

Fig. 4 zeigt den erfindungsgemäßen Einstellmechanismus 7 schematisch in vertikaler Schnittebene durch die Umlenkrolle 10. Der Schlitten 8 ist derart an der Führung 9 angebracht, dass zwischen ihm und den Auslegern 20a, b beidseitig das axiale Spiel 15, das gemäß dem schematischen Ausschnitt vergrößert dargestellt ist, ausgebildet wird, welches ein Verkippen des Schlittens 8 relativ zur Führung 9 ermöglicht. Ferner zeigt Fig. 4 an jeweiligen Seiten des Schlittens 8 Stellen, an welchen die Kipplager 18 positionierbar sind.

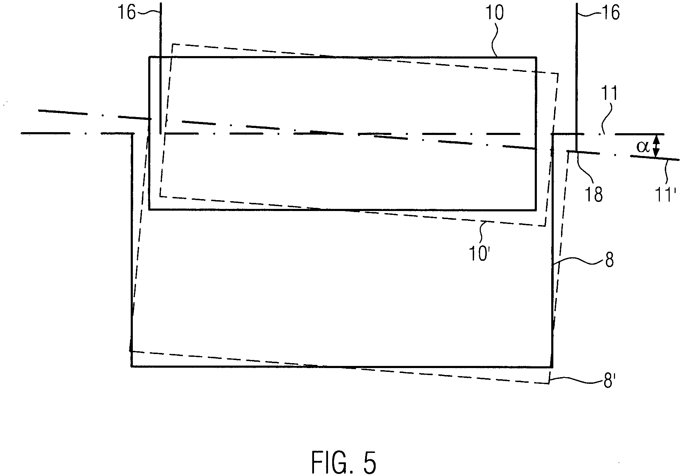

Fig. 5 zeigt in schematischer Darstellung den Schlitten 8 in Spannposition. Der Schlitten 8 hält in horizontaler Projektionsebene betrachtet die Drehachse 11 in einer ersten Ausrichtung. Ferner zeigt Fig. 5, dass der Schlitten 8 kippbar ist. Dies ist in gestrichelter Darstellung gezeigt. In einer gekippten Lage des Schlitten 8, in welcher ihm das Bezugszeichen 8' zugeordnet ist, ist die Drehachse 11 um einen Kippwinkel α in einer zweiten Ausrichtung gelagert. Dort ist ihr das Bezugszeichen 11' zugeordnet. Weiter ist in Fig. 5 zu sehen, dass gegen den Schlitten 8' auf beiden Seiten die Anschläge 16 angestellt sind, wodurch der Schlitten 8' stabil in der gekippten Lage gegen den aufgebrachten Druck der Spanneinheit 12 die Drehachse 11' in der zweiten Ausrichtung hält.

## Patentansprüche

1. Kammerbandmaschine (1) mit einer Kammervorrichtung (2) für einen Verpackungsprozess und einer Transportvorrichtung (3) für einen Beladeprozess der Kammervorrichtung (2),
wobei die Transportvorrichtung (3) ein Förderband (4) sowie einen Einstellmechanismus (7) zum Spannen und Einstellen eines Bandlaufs des Förderbands (4) umfasst,
wobei der Einstellmechanismus (7)
einen Schlitten (8), an welchem zum Führen des Förderbands (4) eine Umlenkrolle (10) mit einer Drehachse (11) drehbar befestigt ist,
eine Führung (9) für den Schlitten (8),
eine Spanneinheit (12), mittels welcher der Schlitten (8) entlang der Führung (9) zwischen mindestens einer ersten Position, in welcher das Förderband (4) entspannt ist, und mindestens einer zweiten Position verstellbar gelagert ist, in welcher der Schlitten (8) relativ zur Führung (9) eine Spannposition einnimmt, in welcher die Drehachse (11) der Umlenkrolle (10) in horizontaler Projektionsebene betrachtet in einer ersten Ausrichtung positioniert ist und eine vorbestimmte Spannung in dem Förderband (4) vorliegt, sowie eine Ausrichteinheit umfasst, mittels welcher der Bandlauf des Förderbands einstellbar ist,
**dadurch gekennzeichnet,**
**dass** die Ausrichteinheit (14) dazu konfiguriert ist, den Schlitten (8) in der Spannposition relativ zur Führung (9) derart zu kippen, dass die Drehachse (11) der Umlenkrolle (10) in einer von der ersten Ausrichtung verschiedenen zweiten Ausrichtung ausgerichtet ist.

2. Kammerbandmaschine nach Anspruch 1, **dadurch gekennzeichnet, dass** in axialer Richtung der Umlenkrolle (10) betrachtet ein axiales Spiel (15) zwischen dem Schlitten (8) und der Führung (9) ausgebildet ist, damit der Schlitten (8) relativ zur Führung (9) gekippt positionierbar ist.

3. Kammerbandmaschine nach einem der vorigen Ansprüche, **dadurch gekennzeichnet, dass** die Ausrichteinheit (14) vom Schlitten (8) entkoppelt gelagert ist.

4. Kammerbandmaschine nach einem der vorigen Ansprüche, **dadurch gekennzeichnet, dass** die Ausrichteinheit (14) mindestens teilweise an einem Maschinengestell (23) der Transportvorrichtung (3) ausgebildet ist.

5. Kammerbandmaschine nach einem der vorigen Ansprüche, **dadurch gekennzeichnet, dass** die Ausrichteinheit (14) zur Schrägstellung des Schlittens (8) mindestens einen verstellbar gelagerten Anschlag (16) umfasst.

6. Kammerbandmaschine nach Anspruch 5, **dadurch gekennzeichnet, dass** der Anschlag (16) stufenlos verstellbar ist.

7. Kammerbandmaschine nach Anspruch 5 oder 6, **dadurch gekennzeichnet, dass** der Anschlag (16) mindestens ein Gewindeelement umfasst.

8. Kammerbandmaschine nach einem der vorigen Ansprüche 5 bis 7, **dadurch gekennzeichnet, dass** der Anschlag (16) manuell verstellbar gelagert ist.

9. Kammerbandmaschine nach einem der vorigen Ansprüche, **dadurch gekennzeichnet, dass** die Spanneinheit (12) und die Ausrichteinheit (14) derart ausgebildet sind, dass sie in entgegengesetzten Richtungen aufeinander Kräfte ausüben.

10. Kammerbandmaschine nach einem der vorigen Ansprüche, **dadurch gekennzeichnet, dass** die Spanneinheit (12) mindestens einen Pneumatikzylinder (13) umfasst.

11. Verfahren zum Spannen und Einstellen eines Bandlaufs eines Förderbands (4) einer Transportvorrichtung (3) für eine Kammerbandmaschine (1), wobei eine Spanneinheit (12) das Förderband (4) spannt und eine Ausrichteinheit (14) den Bandlauf des Förderbands (4) einstellt, wobei die Spanneinheit (12) einen beweglich in einer Führung (9) gelagerten Schlitten (8) in einer Spannposition hält, in welcher der Schlitten eine an ihm drehbar gelagerte Umlenkrolle (10) in einer ersten Ausrichtung trägt, wobei die Umlenkrolle (10) mittels der Ausrichteinheit (14) in eine davon verschiedene, zweite Ausrichtung gebracht wird, um den Bandlauf des Förderbands (4) zu ändern, **dadurch gekennzeichnet, dass** die Ausrichteinheit (14) den Schlitten (8) relativ zu der Führung (9) kippt, um die Umlenkrolle (10) aus der ersten in die zweite Ausrichtung zu bringen.

12. Verfahren nach Anspruch 11, **dadurch gekennzeichnet, dass** der Schlitten (8) in horizontaler Projektionsebene betrachtet relativ zur Führung (9) in mehreren stufenlos einstellbaren Ausrichtungen positioniert werden kann.

13. Verfahren nach Anspruch 11 oder 12, **dadurch gekennzeichnet, dass** die Ausrichteinheit (14) manuell eingestellt wird.

14. Verfahren nach einem der Ansprüche 11 bis 13, **dadurch gekennzeichnet, dass** die Ausrichteinheit bei einer Verstellung des Schlittens (8) von einem Maschinengestell (23) der Transportvorrichtung (3) abgestützt wird.

15. Verfahren nach einem der Ansprüche 11 bis 14, **dadurch gekennzeichnet, dass** durch die Ausrichteinheit (14) aufgebrachte Verstellkräfte von außen auf den Schlitten (8) wirken.
